# EUROPEAN PATENT SPECIFICATION

(11) **EP 3 238 997 B1**
(45) Date of publication and mention of the grant of the patent: **06.03.2019**
(21) Application number: 15872868.3
(22) Date of filing: 16.12.2015
(51) Int. Cl.: B60R 1/072, B60R 1/06, B60R 1/02

(54) **VIEWING CONTROL DEVICE FOR VEHICLE**
SICHTSTEUERUNGSVORRICHTUNG FÜR EIN FAHRZEUG
DISPOSITIF DE COMMANDE DE VISUALISATION POUR VÉHICULE

(30) Priority: 22.12.2014 JP 2014259150
(43) Date of publication of application: 01.11.2017
(73) Proprietor: Kabushiki Kaisha Tokai Rika Denki Seisakusho, Ohguchi-cho Niwa-gun Aichi 480-0195 (JP)
(72) Inventor: MIYAZAKI, Shinichi, Niwa-gun Aichi 480-0195 (JP); NAGAO, Takashi, Niwa-gun Aichi 480-0195 (JP); KOBAYASHI, Fumikazu, Niwa-gun Aichi 480-0195 (JP); KONDO, Juntaro, Niwa-gun Aichi 480-0195 (JP)
(74) Representative: TBK
(86) International application number: PCT/JP2015/085282
(87) International publication number: WO 2016/104299

(56) References cited:
- EP-A2- 1 026 035
- JP-A- S5 929 532
- JP-A- 2007 186 183
- JP-A- 2008 044 397
- JP-A- 2010 208 374

## Description

### Technical Field

The present invention relates to a viewing control device for a vehicle that controls a viewing device for viewing the periphery of a vehicle, such as a door mirror or a camera or the like.

### Background Art

EP 1 026 035 A2 discloses a viewing control device according to the preamble of claim 1.

Japanese Utility Model Application Laid-Open (JP-U) No. H6-23829 proposes a rearview mirror device for a vehicle that has a mirror driving mechanism that obtains a turn direction signal from a direction indicator or a steering wheel, and moves a rearview mirror in respective directions.

Further, Japanese Patent Application Laid-Open (JP-A) No. 2010-208374 proposes an angle control device of a door mirror for a vehicle that has acceleration sensing means for sensing that a vehicle is accelerating at greater than or equal to a given acceleration from a given speed and within a given time period, steering angle range sensing means for sensing that the steering angle of the steering of the vehicle is within a given range within a given time period, and blinker operation sensing means for sensing that the right turn blinker of the vehicle has operated within a given time period, and in which, in a case in which it is sensed by these sensing means that the vehicle is accelerating at greater than or equal to a given acceleration from a given speed and within a given time period, and that the steering angle of the steering of the vehicle is within a given range within a given time period, and that the right turn blinker of the vehicle has operated within a given time period, effects control so as to open up, toward the outer side, the angle of the right side door mirror of the vehicle from a predetermined angle for a given time period and by a given angle.

### SUMMARY OF INVENTION

### Technical Problem

However, although JP-U No. H6-23829 and JP-A No. 2010-208374 describe changing the viewing range interlockingly with turning, it is thought that the viewing range will not return to the original viewing range by the time of the end of turning.

The present invention was made in view of the above-described circumstances, and an object thereof is to, in a case of changing a viewing range interlockingly with turning, reliably return the viewing range to the original viewing range by the time of the end of turning.

### Solution to Problem

In order to achieve the above-described object, the present invention includes: a changing portion that, interlockingly with turning of a vehicle, changes a viewing range of a periphery of the vehicle with respect to a vehicle occupant; and a control section that controls the changing portion so as to return the viewing range to an original viewing range by a time of an end of turning.

In accordance with one aspect of the present invention, at the changing portion, the viewing range of the periphery of the vehicle with respect to the vehicle occupant is changed interlockingly with turning of the vehicle. For example, in a case in which the periphery of the vehicle is viewed by a mirror surface or a camera, the changing portion changes the viewing range by driving an actuator such as a motor or the like so as to change the position of the mirror surface or the direction of imaging. Or, the changing portion changes the viewing range by changing the position that is cut-out from a captured image.

Further, at the control section, the changing portion is controlled so as to return the viewing range to the original viewing range by the time of the end of turning. Due thereto, the viewing range can reliably be returned to the original viewing range by the time of the end of turning.

Note that the control section may respectively estimate a first time period, which is until the viewing range is returned from a current viewing range to the original viewing range, and a second time period, which is from a current point in time until turning ends, and control the changing portion so as to start returning of the viewing range to the original viewing range at a time when the first time period becomes greater than or equal to the second time period. In this case, the control section may estimate the first time period on the basis of an amount of change of the changing portion before and after changing of the viewing range, and a changing speed of the changing portion. Further, in this case, the changing portion may change the viewing range by applying a voltage, and the control section, when estimating the first time period, may carry out control so as to further carry out at least one correction of voltage correction or temperature correction.

Further, the control section may determine a remaining distance until the end of turning, from a turning radius and a current turning angle with respect to a vehicle straight forward advancing direction, and estimate the second time period by dividing the determined remaining distance by a current vehicle speed. In this case, the control section may estimate the turning radius by acquiring navigation information, which includes positional information of the vehicle, of a navigation device, or by computing on the basis of vehicle speed and a steering angle.

### Advantageous Effects of Invention

As described above, in accordance with the present invention, there is the effect that, in a case of changing a viewing range interlockingly with turning, the viewing range can reliably be returned to the original viewing range by the time of the end of turning.

### BRIEF DESCRIPTION OF DRAWINGS

Fig. 1 is an exterior view of a door mirror device for a vehicle that is the object of control of a door mirror control device relating to an embodiment of the present invention.
Fig. 2 is a cross-sectional view (a cross-sectional view along line 2-2 of Fig. 1) in which main portions of the door mirror device for a vehicle are seen from a vehicle vertical direction upper side (a vehicle upper side).
Fig. 3 is a block drawing showing the structure of the control system of the door mirror control device for a vehicle relating to the present embodiment.
Fig. 4 is a drawing for explaining turning-interlocked mirror control.
Fig. 5 is a drawing showing a situation in which the region of a viewing range is changed in accordance with an amount of turning.
Fig. 6A is a drawing showing a situation in which the viewing range has not returned to an original viewing range by the time of the end of turning.
Fig. 6B is a drawing showing a situation in which the viewing range has returned to the original viewing range by the time of the end of turning.
Fig. 7 is a flowchart that shows an example of the flow of processings that are carried out at an ECU of the door mirror control device for a vehicle relating to the present embodiment.
Fig. 8 is a flowchart that shows an example of the flow of mirror interlocking processings that are carried out at the ECU of the door mirror control device for a vehicle relating to the present embodiment.

### DESCRIPTION OF EMBODIMENTS

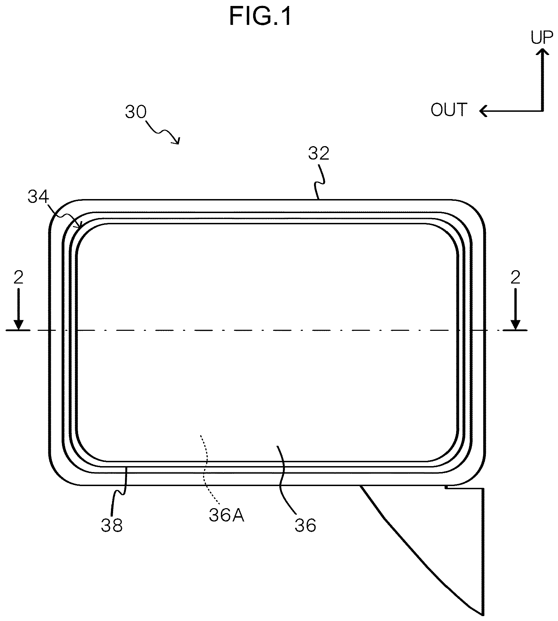

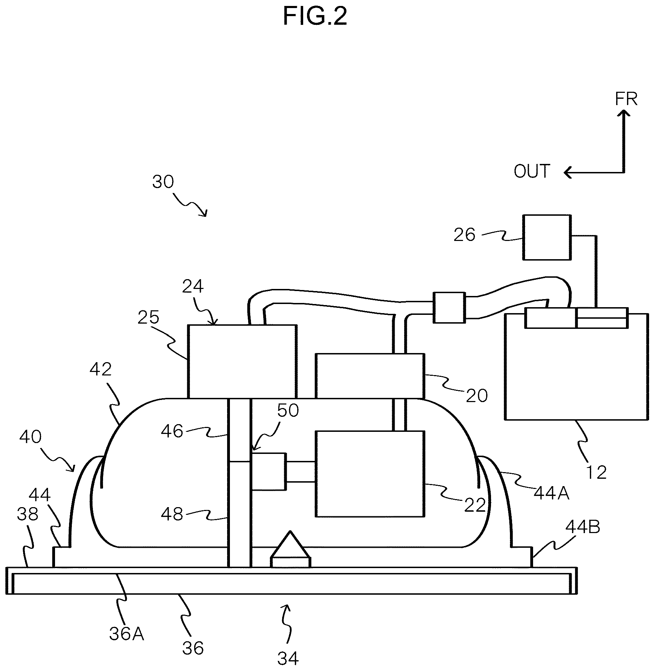

An example of an embodiment of the present invention is described in detail hereinafter with reference to the drawings. Note that, hereinafter, a door mirror control device for a vehicle is described as an example of the viewing control device for a vehicle of the present invention. Fig. 1 is an exterior view of a door mirror device for a vehicle that is the object of control of the door mirror control device relating to the embodiment of the present invention. Further, Fig. 2 is a cross-sectional view (a cross-sectional view along line 2-2 of Fig. 1) in which main portions of the door mirror device for a vehicle are seen from the vehicle vertical direction upper side (the vehicle upper side). Note that, in the drawings, the vehicle front side is indicated by arrow FR, a vehicle transverse direction outer side (the vehicle left side) is indicated by arrow OUT, and the upper side is indicated by arrow UP.

A door mirror device 30 for a vehicle is installed at the outer side of the front end of a vertical direction intermediate portion of a door (a front door) of the vehicle.

As shown in Fig. 1, the door mirror device 30 for a vehicle has a visor 32 that is substantially shaped as a rectangular parallelepiped container and serves as an outer peripheral member. The door mirror device 30 for a vehicle is installed at the door due to the vehicle transverse direction inner side portion of the visor 32 being supported at the door (the vehicle body side). Further, the interior of the visor 32 opens toward the vehicle rear side.

A mirror 34 that is substantially shaped as a rectangular flat plate is provided within the visor 32. The mirror 34 is disposed in the opening portion of the visor 32. A mirror main body 36 (mirror body) is provided at the vehicle rear side portion of the mirror 34. The vehicle rear side surface that is a reflecting film of the mirror main body 36 is made to be a mirror surface 36A. Further, the vehicle front side and the outer periphery of the mirror main body 36 are covered by a mirror holder 38 (a mirror holder outer).

As shown in Fig. 2, a mirror surface adjusting unit 40 that is electrically operated is provided within the visor 32.

A case 42 that is substantially shaped as a hemispherical container is provided at the vehicle front side portion of the mirror surface adjusting unit 40. The interior of the case 42 opens toward the vehicle rear side. The case 42 is supported by the visor 32, and, due thereto, the mirror surface adjusting unit 40 is supported by the visor 32.

A tilting body 44 (mirror holder inner) is provided at the vehicle rear side portion of the mirror surface adjusting unit 40. The tilting body 44 is held by the case 42 so as to be able to tilt (swing, pivot). A sliding tube 44A that is substantially shaped as a cylindrical tube is provided at the tilting body 44. The diameter of the sliding tube 44A becomes gradually smaller toward the vehicle front side, and the sliding tube 44A is made to be able to slide with respect to the peripheral wall of the case 42. A mounting plate 44B that is substantially disc shaped is provided integrally with the vehicle rear side end of the sliding tube 44A. The mirror holder 38 of the mirror 34 is detachably mounted to the vehicle rear side of the mounting plate 44B. Due thereto, the mirror 34 can be tilted integrally with the tilting body 44 and with respect to the case 42, with the center of gravity position of the mirror 34 (the surface central position of the mirror surface 36A) being the center.

An up/down motor (not illustrated) and an in/out motor 22 that serves as an element of a changing portion are fixed to the interior of the case 42. An up/down rod (not illustrated) and an in/out rod 48 that are respectively rod-shaped are connected to the up/down motor and the in/out motor 22 via gear mechanisms 50 that serve as mechanical mechanisms. The up/down rod and the in/out rod 48 are held within the case 42 so as to be able to slide (move) in the vehicle longitudinal direction (the axial direction). The distal end (the vehicle rear side end) of the up/down rod is rotatably held at the mounting plate 44B at the upper side (or may be at the lower side) of the center of gravity position of the mirror 34. The distal end (the vehicle rear side end) of the in/out rod 48 is rotatably held at the mounting plate 44B at the vehicle transverse direction outer side (or may be at the vehicle transverse direction inner side) of the center of gravity position of the mirror 34.

The up/down motor and the in/out motor 22 are electrically connected via mirror surface driving drivers 20 to an ECU 12 (a mirror ECU) that serves as the changing portion and a control section. The ECU 12 is provided within the visor 32 or at the vehicle body side. An adjustment operation device 26 is electrically connected to the ECU 12. When the adjustment operation device 26 is operated by a vehicle occupant (the driver in particular) of the vehicle, due to control of the ECU 12, the mirror surface adjusting unit 40 is operated, and the up/down motor and the in/out motor 22 are driven. Due thereto, the up/down rod and the in/out rod 48 are slid in the vehicle longitudinal direction, and the tilting body 44 and the mirror 34 are tilted with respect to the case 42. Due thereto, the tilted position of the mirror 34 is adjusted, and the angle of the mirror surface 36A of the mirror 34 (the direction in which the mirror surface 36A faces) is adjusted.

When the up/down rod is slid toward the vehicle front side, the tilting body 44 and the mirror 34 are tilted upward (in an upwardly-facing direction), and the mirror surface 36A of the mirror 34 is tilted in an upwardly-facing direction. When the up/down rod is slid toward the vehicle rear side, the tilting body 44 and the mirror 34 are tilted downward (in a downwardly-facing direction), and the mirror surface 36A of the mirror 34 is tilted in a downwardly-facing direction. When the in/out rod 48 is slid toward the vehicle front side, the tilting body 44 and the mirror 34 are tilted outward (in an outwardly-facing direction), and the mirror surface 36A of the mirror 34 is tilted in a direction of facing outwardly in the vehicle transverse direction. When the in/out rod 48 is slid toward the vehicle rear side, the tilting body 44 and the mirror 34 are tilted inward (in an inwardly-facing direction), and the mirror surface 36A of the mirror 34 is tilted in a direction of facing inwardly in the vehicle transverse direction.

As shown in Fig. 2, an up/down sensor (not illustrated) and an in/out sensor 24 are provided at the case 42. The up/down sensor and the in/out sensor 24 respectively are electrically connected to the ECU 12. A housing 25 that is substantially shaped as a rectangular parallelepiped box is provided at the up/down sensor and the in/out sensor 24, respectively. The up/down sensor and the in/out sensor 24 are fixed to the case 42 due to housings 25 being fixed to the outer side of the bottom wall of the case 42.

Detecting rods 46 that are rod-shaped are provided at the housings 25 so as to be slidable in the vehicle longitudinal direction (the axial direction). The detecting rods 46 project-out toward the vehicle rear side from the housings 25 and are urged toward the vehicle rear side. The detecting rods 46 pass-through the bottom wall of the case 42, and are inserted into the interior of the case 42. The detecting rods 46 of the up/down sensor and the in/out sensor 24 are disposed coaxially with and at the vehicle front sides of the up/down rod and the in/out rod 48, respectively. The distal ends (the vehicle rear side ends) of the detecting rods 46 of the up/down sensor and the in/out sensor 24 are, by urging forces, made to contact the proximal ends (the vehicle front side ends) of the up/down rod and the in/out rod 48 respectively. The detecting rods 46 of the up/down sensor and the in/out sensor 24 can always slide in the vehicle longitudinal direction integrally with the up/down rod and the in/out rod 48, respectively. Therefore, due to the up/down sensor and the in/out sensor 24 detecting the slid positions in the vehicle longitudinal direction of the detecting rods 46 respectively, the up/down sensor and the in/out sensor 24 detect the slid positions in the vehicle longitudinal direction of the up/down rod and the in/out rod 48 respectively, and detect the tilted position of the mirror 34 in the up/down direction and the in/out direction.

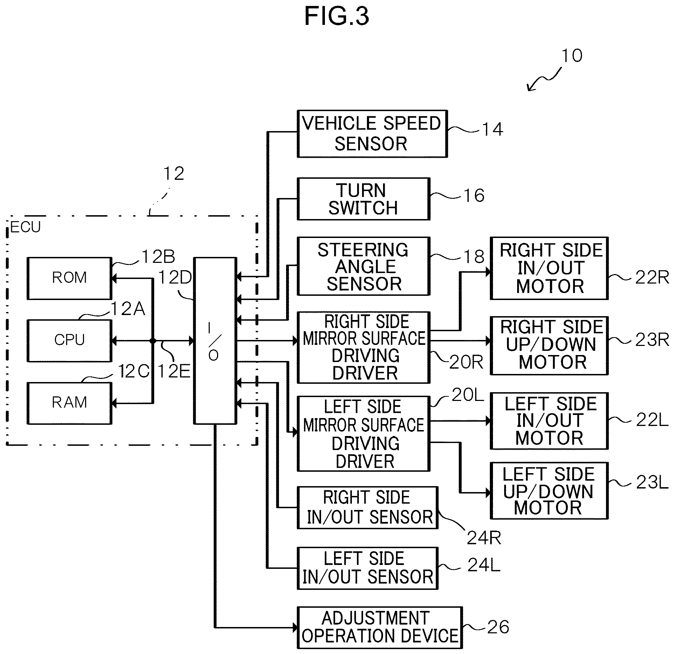

Fig. 3 is a block drawing showing the structure of the control system of the door mirror control device 10 for a vehicle relating to the present embodiment.

As described above, the door mirror control device 10 for a vehicle has the ECU 12. The ECU 12 is structured by a microcomputer in which a CPU 12A, a ROM 12B, a RAM 12C and an I/O (input/output interface) 12D are respectively connected to a bus 12E.

A turning-interlocked mirror control program that is described later, various types of data such as various types of tables, formulas and the like, and the like are stored in the ROM 12B. Due to the program that is stored in the ROM 12B being expanded in the RAM 12C and being executed by the CPU 12A, control that moves the mirror surface 36A of the mirror 34 interlockingly with turning is carried out. Note that, as an example, the turning-interlocked mirror control program is stored as the program that is stored in the ROM 12B, but other programs also are stored.

A vehicle speed sensor 14, a turn switch 16, a steering angle sensor 18, a right side mirror surface driving driver 20R, a left side mirror surface driving driver 20L, a right side in/out sensor 24R, a left side in/out sensor 24L, and the above-described adjustment operation device 26 are connected to the I/O 12D.

The vehicle speed sensor 14 detects the traveling speed of the vehicle (hereinafter called the vehicle speed), and the results of detection are inputted to the ECU 12.

The turn switch 16 is a switch for instructing lighting of the turn signals, and instructions for lighting the left and right turn signals are inputted to the ECU 12. Due thereto, on the basis of the signals of the turn switch 16, the ECU 12 judges the intent of the vehicle occupant to turn.

The steering angle sensor 18 detects the steering angle (hereinafter called steering angle) of the steering, and inputs the results of detection of the steering angle to the ECU 12.

A right side up/down motor 23R and a right side in/out motor 22R are connected to the right side mirror surface driving driver 20R. The right side up/down motor 23R and the right side in/out motor 22R are driven in accordance with instructions of the ECU 12. Further, a left side up/down motor 23L and a left side in/out motor 22L are connected to the left side mirror surface driving driver 20L. The left side up/down motor 23L and the left side in/out motor 22L are driven in accordance with instructions of the ECU 12.

The right side in/out sensor 24R detects the tilted position of the right side mirror 34 in the in/out direction, and the left side in/out sensor 24L detects the tilted position of the left side mirror 34 in the in/out direction, and they respectively input the results of detection to the ECU 12. Note that, although not illustrated, up/down sensors as well are provided in correspondence with the respective left and right mirrors 34, and are connected to the ECU 12.

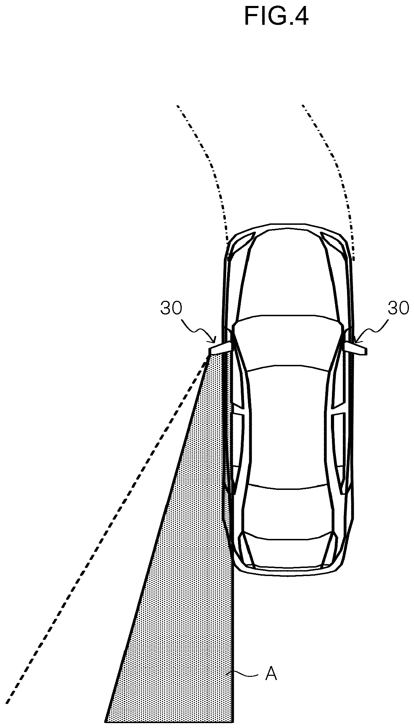

Here, the turning-interlocked mirror control, which serves as the changing portion and which is carried out at the door mirror control device 10 for a vehicle relating to the present embodiment, is described. Fig. 4 is a drawing for explaining the turning-interlocked mirror control.

The turning-interlocked mirror control is carried out due to the ECU 12 executing the turning-interlocked mirror control program that is stored in the ROM 12B.

In a case of carrying out turning such as a right turn or a left turn or the like, the vehicle occupant confirms the door mirror device 30 for a vehicle, and confirms turn collision objects such as bicycles and the like. However, when the turn is started, in accordance with the turning, the viewing range of the periphery of the vehicle, with respect to the vehicle occupant, of the door mirror device 30 for a vehicle moves outside of the region where objects of confirmation as turn collision objects, such as bicycles or the like, exist.

Because objects of confirmation come out of the viewing range at the time of turning of the vehicle in this way, in the turning-interlocked mirror control, control is carried out to tilt the mirror surface 36A of the mirror 34 and change the viewing range, interlockingly with the turning of the vehicle.

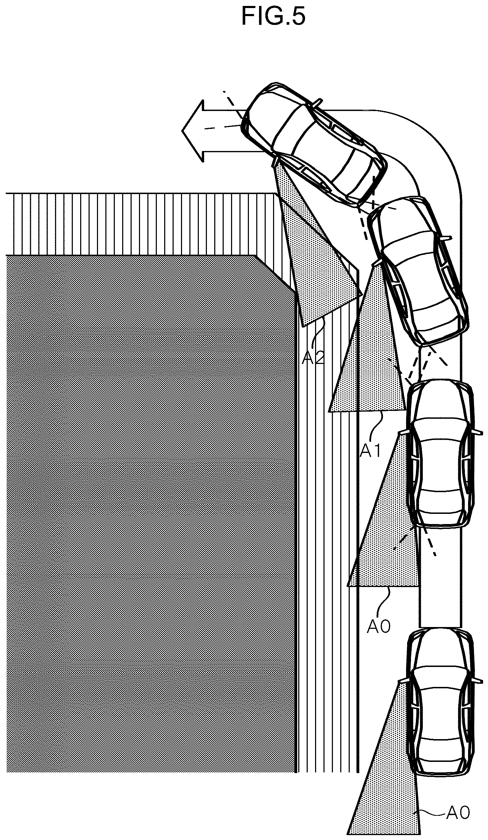

Concretely, in a usual state such as a state of advancing straight forward or the like, the vehicle occupant is at a position of viewing region A of the viewing range that is shown in Fig. 4 and is set in advance. Here, at the time of a turn, the amount of turning is detected from the results of detection of the vehicle speed sensor 14 and the steering angle senor 18. Then, the ECU 12 controls the driving of the in/out motor 22 so as to tilt the mirror surface 36A and move the region A of the viewing range in the direction of the dashed line in Fig. 4, in accordance with the detected amount of turning. Due thereto, as shown in Fig. 5, in accordance with the amount of turning, the viewing range is changed from region A0 to regions A1, A2, and confirmation of turn collision objects at the time of turning can be carried out reliably. Note that, in the present embodiment, the condition for starting the turning-interlocked mirror control is, as an example, starting in a case in which the turn switch 16 is on and the steering angle is greater than or equal to a preset threshold value (e.g., 4° or the like). Further, tilting of the mirror surface 36A that corresponds to the amount of turning is controlled by storing, in the ECU 12 and in advance, amounts of movement of the mirror surface 36A that correspond to amounts of turning, and reading-out an amount of movement that corresponds to the amount of turning.

Note that, in the present embodiment, description is given, as an example, of a case in which the turn switch 16 being on and a steering angle that is greater than or equal to a predetermined steering angle being detected are the condition for starting the turning-interlocked mirror control. However, the change condition is not limited to this. For example, the results of detection of another sensor, such as an acceleration sensor or the like, or the like may be used as the start condition.

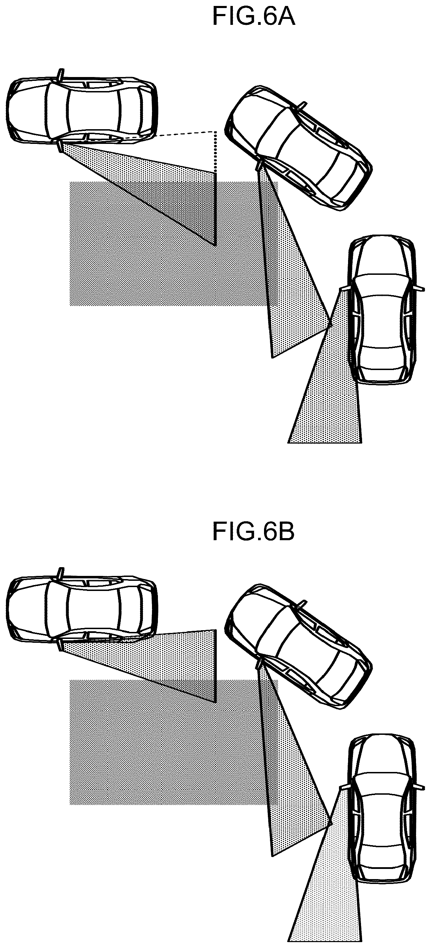

By the way, in a case in which the turning-interlocked mirror control is carried out as described above, there is the need to return the viewing range to the original viewing range when turning ends. However, if the time when the turning-interlocked mirror control is ended and the viewing range starts to be returned to the original viewing range is late, as shown in Fig. 6A, there are cases in which the viewing range cannot be returned to the original viewing range, which is shown by the dotted line, by the time of the end of turning.

Thus, in the present embodiment, an optimal end time of the turning-interlocked mirror control is judged, and control, which returns the viewing range to the original viewing range by the time of the end of turning as shown in Fig. 6B, is carried out.

Concretely, in the midst of the turning-interlocked mirror control, first time period t1, which is needed until the viewing range is returned from the current viewing range to the original viewing range, is estimated, and second time period t2 until the turning ends is estimated. Then, in a case in which the first time period t1 > the second time period t2, the turning-interlocked mirror control is continued, and at the time when the first time period t1 ≥ the second time period t2, moving of the viewing range toward the original viewing range is started. Due thereto, the viewing range can be returned to the original viewing range by the end of turning.

The first time period t1 is computed on the basis of the amount of change in the viewing range and the speed of changing the viewing range. For example, given that there is mirror surface angle θ1[deg] from a reference position before the start of the turning-interlocked mirror control, and there is mirror surface angle θ2[deg] in the midst of the turning-interlocked mirror control, and there is operation speed K[deg/s] of the in/out motor 22, the first time period t1 can be computed by (θ2-θ1)/K.

Further, the turning radius is acquired from navigation information that includes positional information of the vehicle and that is obtained from a navigation device or the like, or the turning radius is determined from the respective results of detection of the vehicle speed sensor 14 and the steering angle sensor 18. Further, the remaining distance until the end of turning is computed from the turning radius and the current turning angle with respect to the direction in which the vehicle advances straight forward. Then, by dividing the determined remaining distance by the current vehicle speed, the second time period t2 until turning ends can be computed.

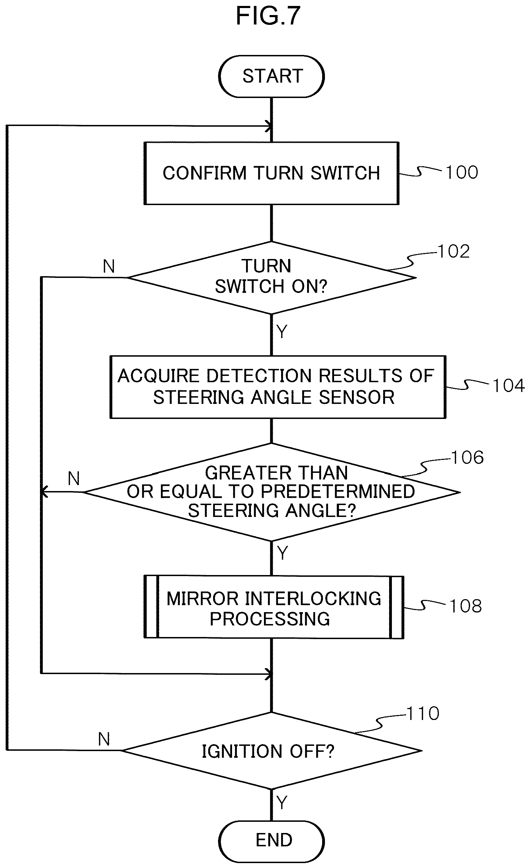

Next, concrete processings that are carried out by the ECU 12 of the door mirror control device 10 for a vehicle, which relates to the present embodiment and is structured as described above, are described. Fig. 7 is a flowchart showing an example of the flow of processings that are carried out by the ECU 12 of the door mirror control device 10 for a vehicle relating to the present embodiment. Note that explanation is given of an example in which the processings of Fig. 7 are started in a case in which an unillustrated ignition switch is turned on.

First, in step 100, the ECU 12 confirms the operating state of the turn switch 16, and the routine moves on to step 102.

In step 102, the ECU 12 judges whether or not the turn switch 16 has been turned on. If this judgment is affirmative, the routine moves on to step 104, and if this judgment is negative, the routine moves on to step 114.

In step 104, the ECU 12 acquires the results of detection of the steering angle sensor 18, and the routine moves on to step 106.

In step 106, the ECU 12 judges whether or not the steering angle detected by the steering angle sensor 18 is greater than or equal to a predetermined steering angle. If this judgment is affirmative, the routine moves on to step 108, and, if this judgment is negative, the routine moves on to step 110.

In step 108, the ECU 12 carries out mirror interlocking processing, and the routine moves on to step 110. Although details thereof are described later, in this mirror interlocking processing, for example, the ECU 12 determines the amount of turning from the respective results of detection of the steering angle sensor 18 and the vehicle speed sensor 14, and controls driving of the in/out motor 22 so as to move the mirror surface 36A to a preset position in accordance with the amount of turning. Concretely, in this control, control is carried out such that, the greater the amount of turning, the more the mirror surface 36A is directed toward the outer side, and the better the region at the outer side can be viewed.

Further, in step 110, the ECU 12 judges whether or not the ignition switch has been turned off. If this judgment is negative, the routine returns to step 100 and the above-described processings are carried out. If this judgment is affirmative, the series of processings is ended.

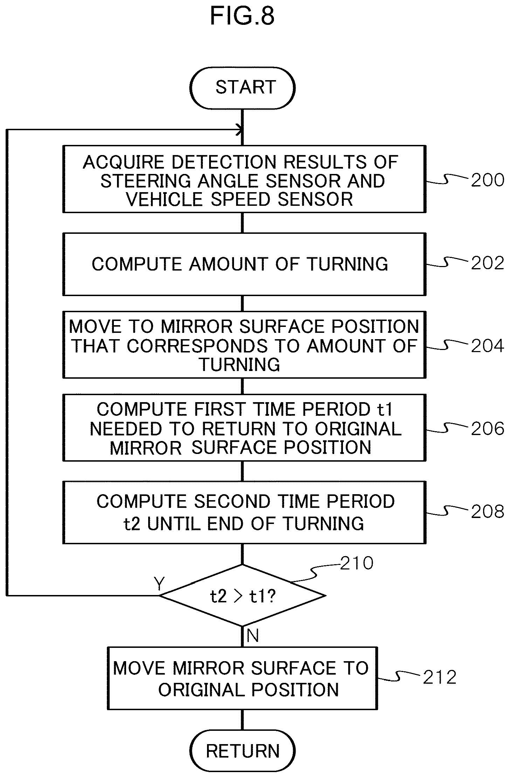

The detailed flow of the mirror interlocking processing that is carried out in aforementioned step 108 is described next. Fig. 8 is a flowchart that shows an example of the flow of mirror interlocking processings that are carried out at the ECU 12 of the door mirror control device 10 for a vehicle relating to the present embodiment.

When there is a transition to the mirror interlocking processing, in step 200, the ECU 12 acquires the results of detection of the steering angle sensor 18 and the vehicle speed sensor 14, and the routine moves on to step 202.

In step 202, the ECU 12 computes the amount of turning from the detected vehicle speed and steering angle, and the routine moves on to step 204.

In step 204, the ECU 12 controls driving of the in/out motor 22 so as to move the mirror surface 36A to a preset position in accordance with the amount of turning, and the routine moves on to step 206.

In step 206, the ECU 12 computes the first time period t1 that is needed until the mirror surface is returned to the original mirror surface position, and the routine moves on to step 208. Namely, given that there is the mirror surface angle θ1[deg] of before the start of the turning-interlocked mirror control, and the mirror surface angle θ2[deg] in the midst of the turning-interlocked mirror control, and the operation speed K[deg/s] of the in/out motor 22, the first time period t1 is computed by (θ2-θ1)/K. Note that the results of detection of the in/out sensor 24 can be used as the mirror surface angle. Further, because the operation speed K of the in/out motor 22 varies in accordance with the voltage value and the temperature, the voltage value and the temperature may be detected, and voltage correction and temperature correction may be carried out. The accuracy can be improved by carrying out correction of the voltage and the temperature. Note that, in a case of carrying out correction, either one of the corrections may be carried out.

In step 208, the ECU 12 computes the second time period t2 until the turning ends, and the routine moves on to step 210. Namely, the ECU 12 computes the remaining distance until turning ends, from the turning radius and the current turning angle, and, by dividing the determined remaining distance by the current vehicle speed, computes the second time period t2 until the end of turning.

In step 210, the ECU 12 judges whether or not the second time period t2 > the second time period t1. If this judgment is affirmative, the routine returns to step 200, and the above-described processings are repeated. If this judgment is negative, the routine moves on to step 212 in order to return the viewing range to the original position by the time the turning ends.

In step 212, the ECU 12 controls driving of the in/out motor 22 so as to move the mirror surface 36A to the original position before the viewing range was changed, and the series of mirror interlocking processings is returned, and the routine moves on to above-described step 110.

By carrying out processings in this way, in the present embodiment, the viewing range is changed interlockingly with turning, and therefore, confirmation of turn collision objects can be carried out reliably. Further, the viewing range can reliably be returned to the viewing range before changing, by the time that turning ends.

Note that the above-described embodiment describes the door mirror control device 10 for a vehicle as an example of the viewing control device for a vehicle, but the present invention is not limited to this. For example, the present invention may be applied to a structure that controls a rearview mirror or the like instead of the door mirror device 30 for a vehicle. Or, instead of the door mirror device 30 for a vehicle, the present invention may be applied to an imaging device such as a camera or the like, and may be applied to driving the imaging direction of the imaging device interlockingly with turning. Further, as the method of changing the viewing range in the case of application to an imaging device such as a camera or the like, there may be employed a structure in which the changing of the imaging direction is not changing by moving the camera, but that changes the display range for the vehicle occupant by cutting-out from the captured image. In this case, the present invention can be realized by using, as the first time period t1, the time required in order to change the cutting-out range.

Further, the above-described embodiment describes, as an example, a case in which, as the condition for starting the turning-interlocked mirror control, the turn switch 16 is turned on and a steering angle of greater than or equal to a predetermined steering angle is detected. However, navigation information of a navigation device, or the like, may be included in the condition for starting.

## Claims

1. A viewing control device for a vehicle, comprising:
a changing portion that, interlockingly with turning of a vehicle, changes a viewing range of a periphery of the vehicle with respect to a vehicle occupant; and
a control section that controls the changing portion so as to return the viewing range to an original viewing range by a time of an end of turning, **characterized in that**
the control section respectively estimates a first time period, which is until the viewing range is returned from a current viewing range to the original viewing range, and a second time period, which is from a current point in time until turning ends, and controls the changing portion so as to start returning of the viewing range to the original viewing range at a time when the first time period becomes greater than or equal to the second time period.

2. The viewing control device for a vehicle of Claim 1, wherein the control section estimates the first time period on the basis of an amount of change of the changing portion before and after changing of the viewing range, and a changing speed of the changing portion.

3. The viewing control device for a vehicle of Claim 2, wherein the changing portion changes the viewing range by applying a voltage, and
the control section, when estimating the first time period, carries out control so as to further carry out at least one correction of voltage correction or temperature correction.

4. The viewing control device for a vehicle of any one of Claim 2 or Claim 3, wherein the control section determines a remaining distance until the end of turning, from a turning radius and a current turning angle with respect to a vehicle straight forward advancing direction, and estimates the second time period by dividing the determined remaining distance by a current vehicle speed.

5. The viewing control device for a vehicle of Claim, 4, wherein the control section estimates the turning radius by acquiring navigation information, which includes positional information of the vehicle, of a navigation device, or by computing on the basis of vehicle speed and a steering angle.

## Patentansprüche

1. Sichtsteuervorrichtung für ein Fahrzeug mit:
einem Änderungsabschnitt, der beim Verändern der Richtung eines Fahrzeugs einen Sichtbereich einer Umgebung des Fahrzeugs mit Bezug auf einen Fahrzeuginsassen entsprechend ändert; und
einer Steuereinrichtung, der den Änderungsabschnitt steuert, um mit dem Sichtbereich zu einem ursprünglichen Sichtbereich zu einem Zeitpunkt zurückzukehren, an dem die Veränderung der Richtung endet,
**dadurch gekennzeichnet, dass**
die Steuereinrichtung jeweils eine erste Zeitspanne schätzt, die andauert bis der Sichtbereich von einem aktuellen Sichtbereich zu dem ursprünglichen Sichtbereich zurückgekehrt ist und eine zweite Zeitspanne, die von einem aktuellen Zeitpunkt bis zum Ende der Veränderung der Richtung andauert, und den Änderungsabschnitt steuert, um die Rückkehr des Sichtbereichs zu dem ursprünglichen Sichtbereich, zu einem Zeitpunkt zu starten, wenn die erste Zeitspanne größer oder gleich der zweiten Zeitspanne wird.

2. Sichtsteuervorrichtung für ein Fahrzeug nach Anspruch 1, wobei die Steuereinrichtung die erste Zeitspanne auf Basis eines Änderungsbetrags des Änderungsabschnitts vor und nach der Änderung des Sichtbereichs und eine Änderungsgeschwindigkeit des Änderungsabschnitts schätzt.

3. Sichtsteuervorrichtung für ein Fahrzeug nach Anspruch 2, wobei
der Änderungsabschnitt den Sichtbereich durch Anlegen einer Spannung ändert, und
die Steuereinrichtung, bei der Schätzung der ersten Zeitspanne, Steuerung ausführt, um weiterhin zumindest eine Korrektur der Spannungskorrektur oder Temperaturkorrektur auszuführen.

4. Sichtsteuervorrichtung für ein Fahrzeug nach einem der Ansprüche 2 oder 3, wobei
die Steuereinrichtung einen verbleibenden Abstand bis zum Ende der Veränderung der Richtung bestimmt, von einem Wendekreis und einem aktuellen Lenkwinkel mit Bezug auf eine Vorwärtsrichtung des Fahrzeugs und die zweite Zeitspanne durch Teilung des bestimmten, verbleibenden Abstands durch eine aktuelle Fahrzeuggeschwindigkeit schätzt.

5. Sichtsteuervorrichtung für ein Fahrzeug nach Anspruch 4, wobei
die Steuereinrichtung den Wendekreis durch Akquisition von Navigationsinformationen, die Positionsinformation des Fahrzeugs, einer Navigationsvorrichtung enthalten, oder durch Berechnung auf der Basis einer Fahrzeuggeschwindigkeit und eines Lenkwinkels schätzt.

## Revendications

1. Dispositif de commande de visualisation pour un véhicule, comprenant :
une partie modificatrice qui, en synchronisme avec un virage effectué par un véhicule, modifie une plage de visualisation d'une périphérie du véhicule par rapport à un occupant du véhicule ; et
une section de commande qui commande la partie modificatrice de manière à ramener la plage de visualisation à une plage de visualisation d'origine avant un temps de fin de virage, **caractérisé en ce que** :
la section de commande estime respectivement une première période de temps, qui dure jusqu'à ce que la plage de visualisation soit ramenée d'une plage de visualisation en cours à la plage de visualisation d'origine, et une seconde période de temps, qui dure depuis un instant en cours jusqu'à la fin du virage, et commande la partie modificatrice de manière à commencer à ramener la plage de visualisation à la plage de visualisation d'origine à un instant où la première période de temps devient supérieure ou égale à la seconde période de temps.

2. Dispositif de commande de visualisation pour un véhicule selon la revendication 1, dans lequel la section de commande estime la première période de temps sur la base d'une quantité de modification de la partie modificatrice avant et après la modification de la plage de visualisation, et d'une vitesse de modification de la partie modificatrice.

3. Dispositif de commande de visualisation pour un véhicule selon la revendication 2, dans lequel :
la partie modificatrice modifie la plage de visualisation en appliquant une tension ; et
la section de commande, lors de l'estimation de la première période de temps, met en oeuvre une commande de manière à mettre en oeuvre en outre au moins une correction parmi une correction de tension et une correction de température.

4. Dispositif de commande de visualisation pour un véhicule selon l'une quelconque des revendications 2 et 3, dans lequel la section de commande détermine une distance restante jusqu'à la fin du virage, à partir d'un rayon de braquage et d'un angle de braquage en cours par rapport à une direction de progression directe du véhicule, et estime la seconde période de temps en divisant la distance restante déterminée, par une vitesse de véhicule en cours.

5. Dispositif de commande de visualisation pour un véhicule selon la revendication 4, dans lequel la section de commande estime le rayon de braquage en acquérant des informations de navigation, lesquelles incluent des informations de position du véhicule, d'un dispositif de navigation, ou en effectuant un calcul sur la base d'une vitesse de véhicule et d'un angle de direction.
